Europäisches Patentamt

European Patent Office

Office européen des brevets

(11) Publication number: **0 190 780**
**B1**

# EUROPEAN PATENT SPECIFICATION

(45) Date of publication of patent specification: **16.05.90**

(21) Application number: **86200060.1**

(22) Date of filing: **14.01.86**

(51) Int. Cl.⁵: **A 22 B 3/06, A 22 B 3/10**

(54) Process and device for stunning slaughter animals, in particular for stunning and subsequently sticking slaughter animals.

(30) Priority: **21.01.85 NL 8500147**

(43) Date of publication of application:
**13.08.86 Bulletin 86/33**

(45) Publication of the grant of the patent:
**16.05.90 Bulletin 90/20**

(84) Designated Contracting States:
**AT BE CH DE FR GB IT LI LU NL SE**

(56) References cited:
**EP-A-0 114 063**
**DE-A-3 133 990**
**US-A-2 185 949**

(73) Proprietor: **MACHINEFABRIEK G.J. NIJHUIS
B.V.
Parallelweg 4 Postbus 102
NL-7100 AC Winterswijk (NL)**

(72) Inventor: **Nijhuis, Gerrit Jan
Rusthuisstraat 10
NL-7101 JH Winterswijk (NL)**

(74) Representative: **van der Beek, George Frans, Ir.
et al
Nederlandsch Octrooibureau Scheveningseweg
82 P.O. Box 29720
NL-2502 LS 's-Gravenhage (NL)**

Courier Press, Leamington Spa, England.

**Description**

The invention relates in the first place to a process for electrically stunning and subsequently sticking slaughter animals.

It is well known to electrically stun a slaughter animal by means of two electrodes which are placed manually or automatically on either side of the head of the animal to be stunned while the animal itself is in the passage of a conveyor which comprises two endless conveyor belts which are placed opposite each other in such a way that they form a V-shaped passage which conveyor belts support and convey the animal towards the location where the stunning is performed.

After stunning the animals are stepped in the carotid artery in order to bleed. This stabbing takes place as a rule after the stunned animal has left the conveyor and is suspended in vertical position with its head downwardly by means of a chain fastened to a hind leg which chain is connected to an upwardly moving conveyor. In this vertical position stabbing is performed by sticking a knife into the carotid artery to drain off the blood.

Accordingly stunning and sticking takes place at two different places which follow one another in the slaughter line.

If the stunning is performed manually a pair of stunning tongues are used as e.g. disclosed in US—A—2,185,949. If automatic stunning is used examples are found in EP—A—0 021 548 and 0 067 482.

From DE—A—3 133 990 a process and apparatus are known for sticking slaughter animals which sticking takes place after stunning and with the animal in the conveyor in which the stunning did take place. For the sticking one makes use of the phenomena that the animal after stunning holds its head in a rigid often upwardly directed position. For finding the carotid artery use is made of a heat sensor and control means for directing the knife towards the spot found by the heat sensor.

With this known process and apparatus stunning and sticking and accordingly bleeding takes place in the same conveyor and not at different places.

The well functioning of said known process and apparatus depends from the question whether the stunned animal will keep its head in the desired ideal position. This, however, often is not the case. The head may be directed downwardly and/or sidewardly and even if the head is held upwardly it seldom is held upwardly to an extent such that proper finding of the place of the carotid artery and its stabbing can take place without failure.

Purpose of the invention is to provide in the first place a process by means of which in a simple way proper stunning and sticking can take place in the same conveyor. This object is achieved in that the process according to the invention comprises the steps of:

gripping the sides of an animal between two endless conveyor belts which are placed opposite each other, and conveying the animal,

preforming electrodes in such a way that when they are located around the head of the animal, in particular around the snout, they partially enclose the head or snout,

moving the electrodes together to clamp and to partially enclose the head or snout,

stunning the animal by an electrical impulse,

pulling the head up by means of the electrodes in such a way that the neck is stretched and

sticking the animal whilst still in the conveyor while the electrodes are still in position holding the head high by stabbing the carotid artery.

By the proper shape of the electrodes, by clamping the head or snout of the animals and by pulling the head upwardly by means of the electrodes the head, after stunning, is always brought in the proper position for stabbing.

In its simplest form this means that the man who performs the stunning by means of a pair of stunning tongues now grips the head or snout of the animal with the electrodes, clamps the electrodes around the head or snout and after stunning pulls the head upwardly which easily can be done because the man who performs manual stunning is as a rule placed above the conveyor.

The invention also relates to a device for carrying out the process according to the invention said device comprising a conveyor with two endless belts which are placed parallel to each other in such a way that they form between them a horizontal passage of V-shaped cross section, which endless belts can grip the animal to be stunned and move it forwards, said device comprising two electrodes, which extend into the passage of the conveyor and can engage upon both sides of the head of the animal to be stunned which electrodes can swing upwardly and forwardly about a horizontal axis.

Examples of such a device can be found in European patent applications 0,021,548 and 0,067,482, which have been laid open for inspection. In these known devices the stunning is carried out by the animals for stunning, which are moved with the conveyor, being moved against the electrodes in the passage, following which these electrodes move with the moving animals and in contact with the sides of the head of said animals, with little or no difference in speed. After the stunning, the stunned animals slide under the electrodes, through the fact that they can swing far enough upwards and then fall off the conveyor, so that the electrodes can be moved back to their initial position, either controlled by means fitted for the purpose, or under the force of gravity. In said known devices the electrodes after stunning move upwardly about the horizontal transverse axis to allow the animals which are stunned to leave the conveyor. The invention makes use of said swinging movement in that according to the invention the electrodes are moreover hingedly attached such that they can be moved in a direction which is transverse to the direction of conveyance towards each other and away from each other which electrodes are connected to an operating mechanism by means of which the electrode can be moved in said transverse direction and can be clamped upon the head or snout of the animal to be stunned and moved apart after the electrodes have performed an upwardly swinging movement about the axis and after the sticking being performed.

This has the result that during the upward swinging movement of the electrodes and with the head or snout of the animal still clamped between the electrodes the neck portion of the animal is stretched and in said stretched position the knife for sticking the carotid artery can be put into operation via to the release of the head or snout by moving the electrodes apart.

It is advantageous here if the electrodes are shaped in such a way that each electrode is adapted to at least part of the shape of the side of the head or snout of the animal to be stunned, viewed in a cross section of the head or snout. This shape can be such that the electrodes are arched, with the hollows of the curves facing each other. By their shape and clamping, such electrodes ensure not only excellent contact, and thus good current flow while the stunning current impulse is being given, but they also hold the snout or head firmly.

The release of the animal after sticking can be made dependent from a predetermined amount of upward movement of the electrodes. For example after a particular angle of swing the electrodes can receive a signal which puts the closing means out of action and activates the means which cause the electrodes to move apart. The closing means can be formed by a pressure cylinder, the return means by using a spring or by a double acting cylinder.

The signal for closing the electrodes can be delivered by a feel voltage which flows as soon as the electrodes get into contact with the animal or can be delivered by proximity switches, e.g. infrared switches, radar switches and switches acting by the interruption of a light beam.

It is observed that from EP—A—0 114 063 a stunning device is known in which the animals to be stunned are one by one after another received into a cage, moved upwardly with said cage into the operation area of electrodes which electrodes are then by horizontal and vertical movement adjusted with respect to the head of the animal after which the animal is stunned and thereafter sidewardly released to be received by a receiving table upon which the chaining of the animal for further slaughter purposes, such as sticking, can take place. The electrodes engage the sides of the head of the animal but they cannot perform an upward pull upon the head of the animal to stretch its neck. Sticking takes place outside the stunning device.

Since with the electrodes clamping round the head or snout the position of the head of the animal in such an automatic stunning device is determined precisely, sticking can now also be automated, by a knife being swivellably fastened on an electrode or the carrier of an electrode, with means for movement into and out of the path of the carotid artery of a head clamped by the electrodes. The knife can here be provided with guides which, for example, extend upwards in a V-shape from the knife to be moved upwards, and which first of all grip the sides of the neck and thus position the knife in the correct position relative to the carotid artery. The signal for actuating the means for making the knife carry out the sticking movement can then be derived from the completion of the stunning and/or the completion of a particular upward movement of the electrodes.

The device for carrying out the process of the invention may also comprise a pair of hand operated stunning tongs consisting of two legs which are hingedly connected to each other at a hinge point, which legs, to one side of said hinge point define arms having handles and, to the opposite of said hinge point define arms which are shorter than the arms with handles, said shorter arms being provided with the electrodes as is known from e.g. US—A—2,185,949, which device then according to the invention has electrodes which are arched with the concave sides facing each other and in that an operating cylinder is provided between the arms with handles.

The invention will now be explained in greater detail below with reference to the drawings.

Fig. 1 shows schematically a hand-operated stunning rod with which the process according to the invention can be carried out.

Fig. 2 shows schematically part of the device for carrying out the process according to the invention.

Fig. 3 is a front view of the device of Fig. 2.

Fig. 4 is a front view of another embodiment.

Fig. 5 is a side view of the embodiment of Fig. 4.

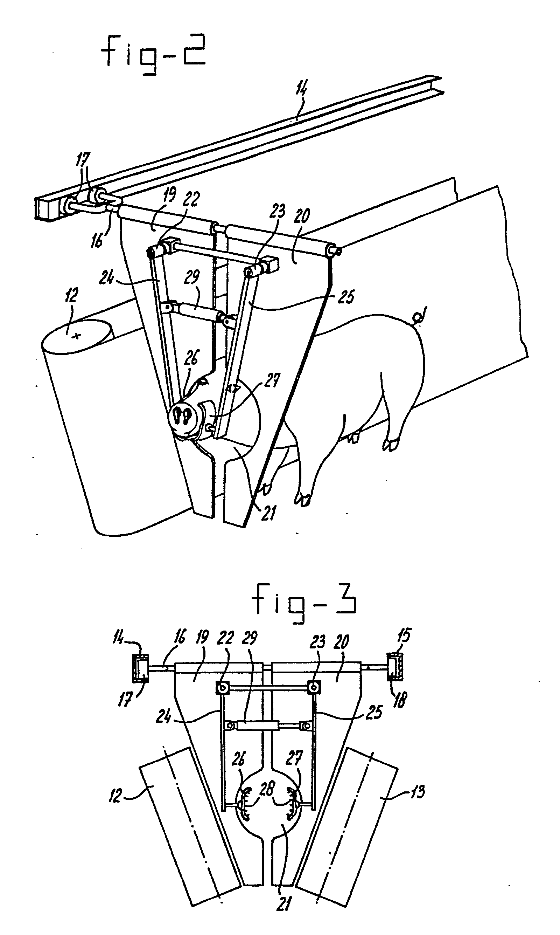

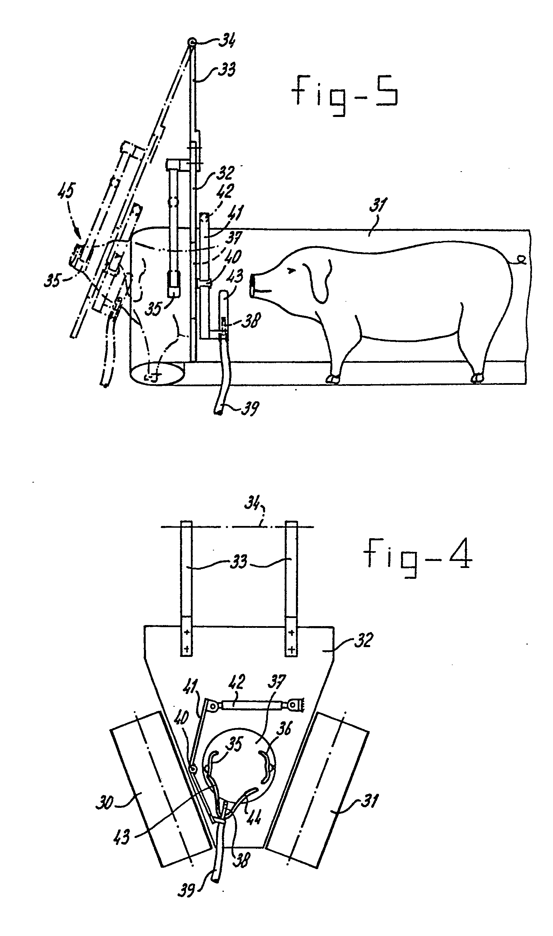

In Figs. 2 and 5 one of the conveyors is left out.

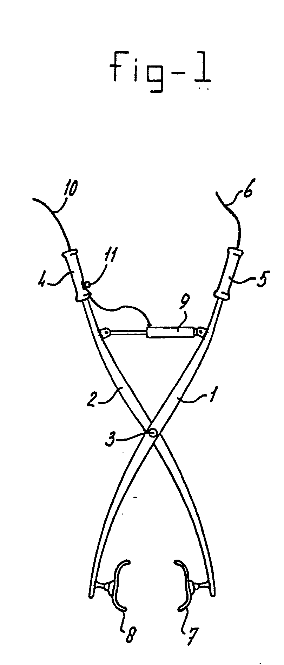

Fig. 1 shows a stunning rod comprising two legs 1 and 2, which are hingedly connected to each other at 3, and are provided with handles 4 and 5 and a high-voltage connection by means of the cable 6 and an operating switch (not shown) which is accommodated, for example, in the handle 5.

The particular feature of the new stunning rod is that the electrodes are formed by curved strips 7 and 8, whose curvature is adapted to the shape of the part of the head of the animal where the electrodes have to be applied, for example halfway along the snout of a pig. Through the curved shape of the electrodes 7 and 8—which if desired can be connected flexibly with the fork legs 1 and 2, so that adaptation to the position of the electrodes is possible when the head is clamped—the head is held firmly.

This makes it possible to pull the head upwards and thus to stretch the neck. An operating cylinder 9 is fitted between the legs 1 and 2 of the stunning rod, to which cylinder compressed air can be fed via the hose 10 and a push button switch 11, said cylinder acting as an aid in clamping of the head.

In the embodiment of Figs. 2 and 3, the device shows two endless conveyors 12 and 13, only one of which is shown in Fig. 2. Such a conveyor is

generally known. Above this conveyor is a rail track 14, 15 in which is movably conducted a carrier 16 with the aid of wheels 17 and 18. Attached to it, swivellably about a cross shaft, is a set of electrode plates 19 and 20, which can function in the known way as electrodes, if within the scope of the invention, generally only for the application of the feel voltage, and which also serve to guide the head of the animal. To this end, these electrode plates 19 and 20 are designed in such a way that they fill the passage practically completely, with the exception of an opening 21.

On these electrode plates 19 and 20 at 22 and 23, arms 24 and 25 are now fixed hingedly about pins which run parallel to the direction of conveyance. These arms 24, 25 carry electrodes 26, 27 which are curved and may be provided with contact points 28. Between the arms 24 and 25 is a pressure cylinder 29 with which the electrodes 26 and 27 can be moved apart or towards each other.

Fig. 2 shows how the snout of an animal, projecting through the opening 21, is gripped by the electrodes 26 and 27 and clamped, following which the stunning electric impulse is given.

It will also be clear in particular from Fig. 2 that when the animal is moved further forward by means of the conveyors 12, 13 the travelling carrier, as soon as it comes against a stop and cannot move any further, permits the animal with clamped snout to be swung upwards by the electrodes. Through the clamping of the snout, the neck is stretched and it is therefore easy to stab the carotid artery from underneath.

The latter process can be automated, as indicated in the embodiment of Figs. 4 and 5.

These Figures show an embodiment with conveyors 30 and 31, between which is suspended a plate 32 from carrier arms 33, which are suspended so as to be freely swivellable about a pin 34. Fastened on this plate 32 there are again electrodes 35, 36, for example in the manner shown in Fig. 3, but for the sake of clarity this is not shown in detail. The plate has a central opening 37 through which the animal can project with its snout. When this takes place it can be clamped by the electrodes 35 and 36. Fig. 5 shows the plate 32 in the rest position with downstream of the opening 37 the electrodes 35 and 36 acting as clamps. Shown on the rear side of the plate 32, thus upstream thereof, is a knife 38, for example a hollow knife which can be connected to a discharge hose 39. This knife 38 is fastened to an arm 41 which hinges at 40, and which is connected to an operating cylinder 42. Guide braces 43 and 44 can be fastened to this knife 38.

Fig. 5 indicates by dotted lines at 45 that on further movement of the animal through the conveyor the snout clamped by the electrodes of necessity has to move upwards, so that the knife can then be stuck into the neck, in which process it can be directed to the correct position by the guides 43, 44. For this a flexible fastening of the knife is needed, which can be produced by fastening the knife to the arm 41 with, for example, a rubber connecting piece.

## Claims

1. Process for electrically stunning and subsequently sticking slaughter animals, comprising the steps of:
   gripping the sides of an animal between two endless conveyor belts (12, 13, 30, 31) which are placed opposite each other, and conveying the animal,
   preforming electrodes (7, 8, 26, 27, 35, 36) in such a way that when they are located around the head of the animal,
   in particular around the snout, they partially enclose the head or snout,
   moving the electrodes (7, 8, 26, 27, 35, 36) together to clamp and to partially enclose the head or snout,
   stunning the animal by an electrical impulse,
   pulling the head up by means of the electrodes (7, 8, 26, 27, 35, 36) in such a way that the neck is stretched and
   sticking the animal whilst still in the conveyor (12, 13, 30, 31) while the electrodes (7, 8, 26, 27, 35, 36) are still in position holding the head high by stabbing the carotid artery.

2. Device for carrying out the process according to claim 1, comprising a conveyor with two endless belts (12, 13, 30, 31) which are placed parallel to each other in such a way that they form between them a horizontal passage of V-shaped cross section, which endless belts can grip the animal to be stunned and move it forwards, said device comprising two electrodes (19, 20, 26, 27, 35, 36) which extend into the passage of the conveyor and can engage upon both sides of the head of the animal to be stunned which electrodes (19, 20, 26, 27, 35, 36) can swing upwardly and forwardly about a horizontal axis (16), characterized in that the electrodes (26, 27, 35, 36) are moreover hingedly attached such that they can be moved in a direction which is transverse to the direction of conveyance towards each other and away from each other, which electrodes are connected to an operating mechanism (29) by means of which the electrodes (26, 27, 35, 36) can be moved in said transverse direction and can be clamped upon the head or snout of the animal to be stunned and moved apart after the electrodes have performed an upwardly swinging movement about the axis (16, 34) and after the sticking being performed.

3. Device according to claim 2, characterized in that the electrodes (26, 27, 35, 36) are shaped in such a way that each electrode is adapted to at least part of the shape of the side of the head or snout of the animal to be stunned, viewed in cross section of the head or snout.

4. Device according to claim 2 or 3, characterized in that the electrodes (26, 27, 35, 36) are arched and face each other with the hollows of the curves.

5. Device according to one or more of the preceding claims 2, 3 or 4, characterized in that a knife (38) is swivellably fastened on an electrode or on a carrier (32) of an electrode, said knife being connected to means (40, 41, 42) for movement of the knife into and out of the path of the carotid artery of the head of an animal held clamped between the electrodes.

6. Device according to claim 5, characterized in that the knife (38) is provided with guiding means (43, 44) which guide the knife (38) into the correct position during its swing towards the neck by gripping the neck of the animal.

7. Device according to claim 4, 5 or 6, characterized in that the means for moving the knife into the working position depend on a signal which indicates that the stunning has been completed.

8. Device for use in the process according to claim 1 comprising hand operated stunning tongs (1, 2) consisting of two legs which are hingedly connected to each other at a hinge point (3), which legs, to one side of said hinge point (3) define arms having handles (4, 5) and, to the opposite side of said hinge point, define arms which are shorter than the arms with handles (4, 5), said shorter arms being provided with electrodes (7, 8) characterized in that the electrodes (7, 8) are arched with the concave sides facing each other and in that an operating cylinder (9) is provided between the arms with handles (4, 5).

**Patentansprüche**

1. Verfahren zum elektrischen Betäuben und anschließendem Abstechen von Schlachttieren, mit den Verfahrensschritten:

Einzwängen eines Tiers an den Seiten zwischen zwei endlosen Förderbändern (12, 13, 30, 31), die einander gegenüberliegend angeordnet sind, und das Tier befördern,

Anlegen von Elektroden (7, 8, 26, 27, 35, 36) in der Art, daß, wenn sie um den Kopf des Tieres, insbesondere um die Schnauze herum angeordnet sind, sie den Kopf oder die Schnauze teilweise einschließen,

Zusammenführen der Elektroden (7, 8, 26, 27, 35, 36), um den Kopf oder die Schnauze einzuklemmen und teilweise einzuschließen,

Betäuben des Tiers durch einen elektrischen Impuls,

Hochziehen des Kopfes mit Hilfe der Elektroden (7, 8, 26, 27, 35, 36) in der Weise, daß der Nacken gestreckt wird und

Abstechen des Tiers, während es sich noch in dem Förderer (12, 13, 30, 31) befindet und die Elektroden (7, 8, 26, 27, 35, 36) noch in ihrer Position sind und den Kopf hochhalten, wobei die Halsschlagader durchstochen wird.

2. Vorrichtung zur Durchführung des Verfahrens nach Anspruch 1, mit einem Förderer, mit zwei endlosen Förderbändern (12, 13, 30, 31), die parallel zueinander in der Weise angeordnet sind, daß zwischen ihnen ein horizontaler Durchgang mit einem V-förmigen Querschnitt gebildet ist, wobei die endlosen Förderbänder das zu betäubende Tier greifen und vorwärts bewegen können und die Vorrichtung zwei Elektroden (19, 20, 26, 27, 35, 36) umfaßt, die in den Durchgang des Förderers hineinragen und beide Seiten des Kopfes des zu betäubenden Tiers ergreifen können, wobei die Elektroden (19, 20, 26, 27, 35, 36) aufwärts und vorwärts um eine horizontale Achse (16) schwenken können, dadurch gekennzeichnet, daß die Elektroden (26, 27, 35, 36) darüber hinaus gelenkig in der Weise befestigt sind, daß sie in einer Richtung quer zur Richtung des Förderers aufeinander zu und voneinander weg bewegt werden können, wobei die Elektroden mit einem Arbeitsmechanismus (29) verbunden sind, mit dessen Hilfe die Elektroden (26, 27, 35, 36) in der Querrichtung bewegt und am Kopf oder der Schnauze des zu betäubenden Tieres angeklemmt und, nachdem die Elektroden eine aufwärts gerichtete Schwenkbewegung um die Achse (16, 34) und nachdem das Abstechen ausgeführt worden ist, abgenommen werden können.

3. Vorrichtung nach Anspruch 2, dadurch gekennzeichnet, daß die Elektroden (26, 27, 35, 36) in der Weise geformt sind, daß jede Elektrode wenigstens an einen Teil der Seite des Kopfes oder der Schnauze des zu betäubenden Tiers, in Bezug auf einen Querschnitt des Kopfes oder der Schnauze, in der Form angepaßt ist.

4. Vorrichtung nach Anspruch 2 oder 3, dadurch gekennzeichnet, daß die Elektroden (26, 27, 35, 36) gekrümmt sind und mit ihren konkaven Seiten einander gegenüberliegend angeordnet sind.

5. Vorrichtung nach einem oder mehreren der vorhergehenden Ansprüche 2, 3 oder 4, dadurch gekennzeichnet, daß ein Messer (38) schwenkbar an einer Elektrode oder an einem Elektrodenträger (32) befestigt ist, wobei das Messer mit einer Einrichtung (40, 41, 42) für die Bewegung des Messers in und aus dem Weg der Halsschlagader des Kopfes des Tiers, das zwischen den Elektroden eingeklemmt gehalten wird, verbunden ist.

6. Vorrichtung nach Anspruch 5, dadurch gekennzeichnet, daß das Messer (38) mit einer Führungseinrichtung (43, 44) versehen ist, die das Messer (38) durch Ergreifen des Nackens des Tieres in die korrekte Position bringt, wenn es sich in Richtung auf den Nacken bewegt.

7. Vorrichtung nach Anspruch 4, 5 oder 6, dadurch gekennzeichnet, daß die Einrichtung zur Bewegung des Messers in die Arbeitsposition auf ein Signal reagiert, das anzeigt, daß der Betäubungsvorgang abgeschlossen ist.

8. Vorrichtung zur Verwendung bei dem Verfahren nach Anspruch 1, mit einer handbetriebenen Betäubungszange (1, 2), die aus zwei Schenkeln, die verschwenkbar miteinander an einem Drehpunkt (3) verbunden sind, besteht, wobei die Schenkel auf einer Seite des Drehpunkts (3) Arme mit Griffen (4, 5) und auf der gegenüberliegenden Seite des Drehpunktes Arme, die kürzer als die Arme mit den Griffen (4, 5) sind, bilden, wobei die kürzeren Arme mit Elektroden (7, 8) versehen sind, dadurch gekennzeichnet, daß die Elektroden (7, 8) gebogen und mit ihren konkaven Seiten einander gegenüberliegend angeordnet sind, und daß ein Arbeitszylinder (9) zwischen den Armen mit den Griffen (4, 5) vorgesehen ist.

**Revendications**

1. Procédé pour étourdir par voie électrique et ensuite égorger des bêtes d'abattoir, comprenant les étapes consistant à:

saisir les flancs de l'animal entre deux bandes transporteuses sans fin (12, 13, 30, 31) qui sont disposées en face l'une de l'autre, et transporter l'animal,

préformer des électrodes (7, 8, 26, 27, 35, 36) de façon à ce que, lorsqu'elles sont placées autour de la tête de l'animal,

en particulier autour du museau, elles enferment partiellement la tête ou le museau,

déplacer les électrodes (7, 8, 26, 27, 35, 36) ensemble pour serrer et enfermer partiellement la tête ou le museau,

étourdir l'animal par une impulsion électrique,

tirer la tête vers le haut au moyen des électrodes (7, 8, 26, 27, 35, 36), de façon à ce que la tête soit dressée, et

égorger l'animal alors qu'il est encore sur le transporteur (12, 13, 30, 31) et que les électrodes (7, 8, 26, 27, 35, 36) sont encore en position pour maintenir la tête dressée, pendant que l'on tranche l'artère carotide.

2. Dispositif pour la mise en oeuvre du procédé selon la revendication 1, comprenant un transporteur ayant deux bandes sans fin (12, 13, 30, 31) qui sont placées parallélement l'une à l'autre de telle façon, qu'elle forment entre elles un passage horizontal ayant une section transversale en forme de V, ces bandes sans fin pouvant saisir l'animal devant être étourdi et le déplacer vers l'avant, ledit dispositif comprenant deux électrodes (19, 20, 26, 27, 35, 36) qui s'étendent dans le passage du transporteur et peuvent saisir la tête de l'animal à étourdir sur ses deux côtés, ces électrodes (19, 20, 26, 27, 35, 36) pouvant osciller vers le haut et vers l'avant autour d'un axe horizontal (16), caractérisé en ce que les électrodes (26, 27, 35, 36) sont en outre montées en articulation de telle façon qu'elles puissent être déplacées dans une direction qui est transversale à la direction de transport, l'une vers l'autre et en s'éloignant l'une de l'autre, ces électrodes étant raccordées à un mécanisme de commande (29) au moyen duquel les électrodes (26, 27, 35, 36) peuvent être déplacées dans ladite direction transversale et peuvent être serrées sur la tête ou le museau de l'animal à étourdir et éloignées l'une de l'autre après que les électrodes aient effectué un mouvement d'oscillation vers le haut autour de l'axe (16, 34) et après que l'égorgement ait été effectué.

3. Dispositif selon la revendication 2, caractérisé en ce que les électrodes (26, 27, 35, 36) sont formées de telle façon que chaque électrode est adaptée à au moins une partie de la forme du côté de la tête ou du museau de l'animal à étourdir, vue en coupe transversale de la tête ou du museau.

4. Dispositif selon la revendication 2 ou 3, caractérisé en ce que les électrodes (26, 27, 35, 36) sont arquées et se font face avec l'intérieur de leur courbure.

5. Dispositif selon l'une quelconque des revendications précédentes 2, 3 ou 4, caractérisé en ce qu'une lame (38) est fixée en pivotement sur une électrode ou sur un support (32) d'une électrode, ladite lame étant raccordée à des moyens (40, 41, 42) pour le déplacement de la lame dans le trajet et hors du trajet de l'artère carotide de la tête d'un animal maintenue serrée entre les électrodes.

6. Dispositif selon la revendication 5, caractérisé en ce que la lame (38) est munie de moyens de guidage (43, 44) qui guident la lame (38) dans la position correcte pendant son oscillation vers le cou, en saisissant le cou de l'animal.

7. Dispositif selon la revendication 4, 5 ou 6, caractérisé en ce que les moyens pour amener la lame dans la position de travail sont fonction d'un signal qui indique que l'étourdissement a été effectué.

8. Dispositif pour être utilisé dans le procédé selon la revendication 1, comprenant des pinces d'étourdissement (1, 2) à fonctionnement manuel, consistant en deux jambes qui sont raccordées entre elles de manière articulée en un point d'articulation (3), lesquelles jambes, d'un côté dudit point d'articulation (3), définissent des bras ayant des poignées (4, 5) et du côté opposé dudit point d'articulation, définissent des bras qui sont plus courts que les bras avec poignées (4, 5), lesdits bras plus courts étant munis d'électrodes (7, 8), caractérisé en ce que les électrodes (7, 8) sont arquées, leurs faces concaves étant opposées l'une à l'autre, et en ce qu'un cylindre de commande (9) est prévu entre les bras avec poignées (4, 5).

EP 0 190 780 B1

Fig-1

fig-2

fig-3

2

Fig-5

Fig-4

3